# EUROPEAN PATENT APPLICATION

(11) **EP 4 174 826 A1**
(43) Date of publication of application: **03.05.2023**
(21) Application number: 21829427.0
(22) Date of filing: 25.06.2021
(51) Int. Cl.: G09B 9/08, G09B 9/32, G09B 9/34, G09B 9/46, G06T 19/00

(54) **AIRCRAFT VR TRAINING SYSTEM, AIRCRAFT VR TRAINING METHOD, AND AIRCRAFT VR TRAINING PROGRAM**

(30) Priority: 26.06.2020 JP 2020110966
(71) Applicant: KAWASAKI JUKOGYO KABUSHIKI KAISHA, Kobe-shi, Hyogo 650-8670 (JP)
(72) Inventor: KOMATSU, Seiji, Chuo-ku, Kobe-shi, Hyogo 6508670 (JP); MURATA, Yoshio, Chuo-ku, Kobe-shi, Hyogo 6508670 (JP); KOBAYASHI, Takumi, Chuo-ku, Kobe-shi, Hyogo 6508670 (JP); KURACHI, Osamu, Chuo-ku, Kobe-shi, Hyogo 6508670 (JP); NISHIMURA, Hirofumi, Chuo-ku, Kobe-shi, Hyogo 6508670 (JP); SHIMIZU, Yuichi, Chuo-ku, Kobe-shi, Hyogo 6508670 (JP); KAWABE, Yuji, Chuo-ku, Kobe-shi, Hyogo 6508670 (JP); KONDO, Hiroki, Chuo-ku, Kobe-shi, Hyogo 6508670 (JP); SHINKAI, Soma, Chuo-ku, Kobe-shi, Hyogo 6508670 (JP)
(74) Representative: Puschmann Borchert Kaiser Klettner Patentanwälte Partnerschaft mbB
(86) International application number: PCT/JP2021/024238
(87) International publication number: WO 2021/261594

(57) **Abstract**

A VR training system 100 includes: a training terminal 1 that generates a simulation image for simulation training in VR space and includes an avatar of a trainee linked to action of the trainee in real space and a controller 3B with which the trainee performs an omission action. When an omission action is performed with the controller 3B in a series of actions in the simulation training, the training terminal 1 omits a predetermined action of the avatar and updates the simulation image from a state before the predetermined action to a state after the predetermined action.

## Description

### FIELD

The present application relates to an aircraft VR training system, an aircraft VR training method, and an aircraft VR training program.

### BACKGROUND

A system that performs VR experience in virtual reality space (i.e., VR space) has been known to date. Patent Document 1, for example, describes a system that performs fire extinguishing experience using VR space. In this system, a simulation image in accordance with a series of actions necessary for fire extinguishing is generated.

### CITATION LIST

### PATENT DOCUMENT

Patent Document 1: Japanese Patent No. 6410378

### SUMMARY

### TECHNICAL PROBLEM

Regarding training with an aircraft such as a helicopter, training with an actual aircraft involves danger as well as costs, and thus, training using VR space is being taken into consideration. However, a series of actions in training (especially cooperative training) can include an action with which little or no effect is obtained even by using VR space. Thus, if the series of training actions is performed simply by using VR space, efficiency of training might degrade.

It is therefore an object of the technique disclosed in the present application to perform highly efficient training in aircraft training using VR space.

An aircraft VR training system disclosed here includes a terminal and an operation device. The terminal generates a simulation image for performing simulation training in VR space, and the simulation image includes an avatar of a trainee linked to action of the trainee in real space. The trainee performs an omission action with the operation device. When the omission action is performed with the operation device in a series of actions in the simulation training, the terminal omits a predetermined action of the avatar and updates the simulation image from a state before the predetermined action to a state after the predetermined action.

An aircraft VR training method disclosed here is a method for performing simulation training using a simulation image in VR space, and the simulation image is generated by a terminal and includes an avatar of a trainee linked to action of the trainee in real space. The aircraft VR training method includes: performing an omission action by the trainee; and omitting a predetermined action of the avatar by the terminal and updating the simulation image from a state before the predetermined action to a state after the predetermined action by the terminal when the omission action is performed in a series of actions in the simulation training.

An aircraft VR training program disclosed here is for causing a computer to implement the function of generating a simulation image for performing simulation training in VR space, and the simulation image includes an avatar of a trainee linked to action of the trainee in real space. The aircraft VR training program causes the computer to implement the functions of: receiving an operation signal of the omission action by the trainee; and omitting a predetermined action of the avatar and updating the simulation image from a state before the predetermined action to a state after the predetermined action when receiving the operation signal of the omission action in a series of actions in the simulation training.

The aircraft VR training system enables highly efficient training.

The aircraft VR training method enables highly efficient training.

The aircraft VR training program enables highly efficient training.

### BRIEF DESCRIPTION OF THE DRAWINGS

[FIG. 1] FIG. 1 is a view illustrating a configuration of a VR training system.
[FIG. 2] FIG. 2 is a schematic drawing illustrating real space where training is performed using the VR training system.
[FIG. 3] FIG. 3 is a block diagram of training terminals of a pilot and a copilot and peripheral equipment thereof.
[FIG. 4] FIG. 4 is a block diagram of training terminals of a hoist operator and a descender and peripheral equipment thereof.
[FIG. 5] FIG. 5 is a block diagram of a setting terminal and peripheral equipment thereof.
[FIG. 6] FIG. 6 is a flowchart showing a flow of trainings in simulation training.
[FIG. 7] FIG. 7 is an example of a schematic simulation image.
[FIG. 8] FIG. 8 is a flowchart showing a descent training process in a training terminal of a descender.
[FIG. 9] FIG. 9 is an example of a schematic simulation image.
[FIG. 10] FIG. 10 is an example of a schematic simulation image.
[FIG. 11] FIG. 11 is an example of a schematic simulation image.
[FIG. 12] FIG. 12 is an example of a schematic simulation image.
[FIG. 13] FIG. 13 is an example of a schematic simulation image.
[FIG. 14] FIG. 14 is a flowchart showing a rescue training process in a training terminal of a descender.
[FIG. 15] FIG. 15 is an example of a schematic simulation image.
[FIG. 16] FIG. 16 is an example of a schematic simulation image.
[FIG. 17] FIG. 17 is a flowchart showing a pull-up training process in a training terminal of a descender.
[FIG. 18] FIG. 18 is an example of a schematic simulation image.

### DESCRIPTION OF EMBODIMENTS

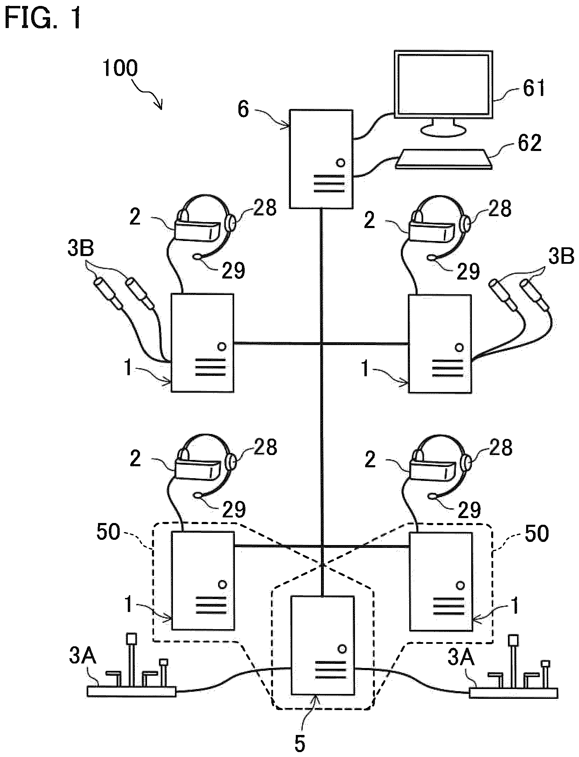

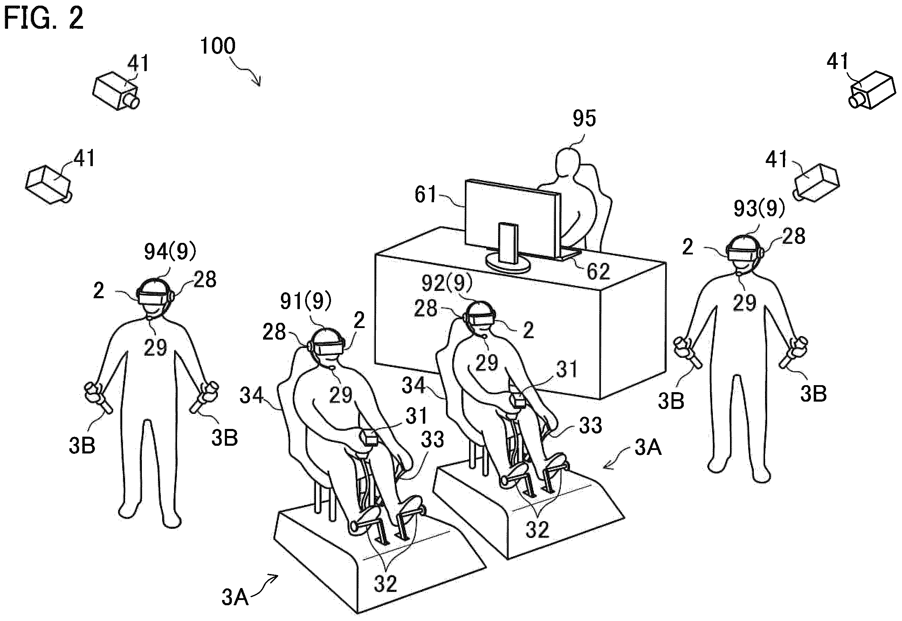

An exemplary embodiment will be described in detail hereinafter with reference to the drawings. FIG. 1 is a view illustrating a configuration of a VR training system 100. FIG. 2 is a schematic drawing illustrating real space where training is performed using the VR training system 100. FIG. 2 does not show terminals.

The VR training system 100 is a system for performing simulation training (hereinafter referred to as "VR training") in common VR space. The VR training system 100 is used for VR training with an aircraft (helicopter in this example). The VR training system 100 generates a simulation image for performing simulation training in common VR space, and includes training terminals 1 that provides a simulation image to associated trainees 9 and a setting terminal 6 having setting information necessary for generating the simulation image. The simulation image is an image forming VR space, and is a so-called VR image. The simulation image includes avatars of the trainees 9, a rescue requester 88, the ground surface, and an airframe 80 of the aircraft. The avatars of the trainees 9 are linked to actions of the trainees 9 in real space.

The training terminals 1 are communicably connected to each other. The training terminals 1 are communicably connected to the setting terminal 6. These terminals are connected to each other by wires through a LAN or the like. The terminals may be wirelessly connected to each other.

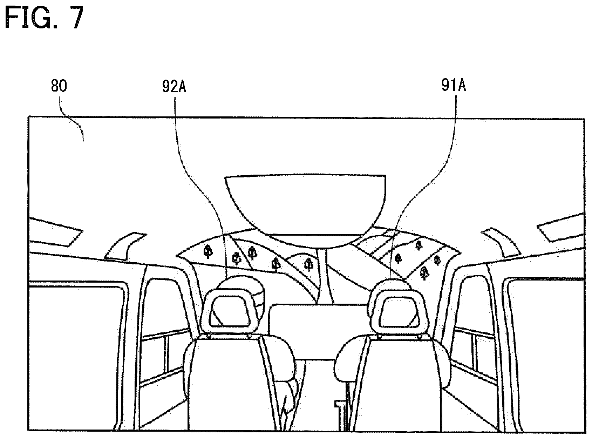

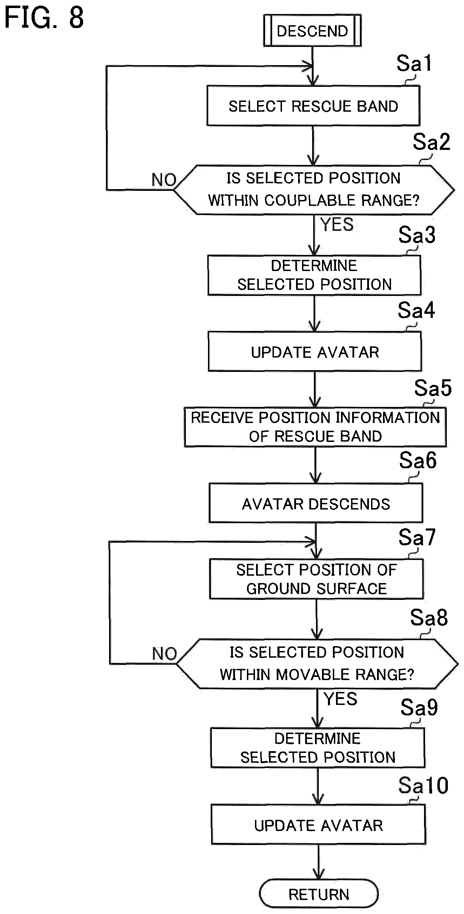

The simulation training is cooperative training by the trainees 9 respectively associated with the training terminals 1. In this example, the trainees 9 perform cooperative training with a rescue helicopter in common VR space by using the VR training system 100. For example, the helicopter includes the airframe 80, a boom 81 extending from an upper portion of the airframe 80 to the right or left in a cantilever manner, a hoist cable 82 hung from the boom 81, a rescue band 83 coupled to the hoist cable 82, a hoisting machine 84 for hoisting the hoist cable 82, and a pendant-type operator for operating the hoisting machine 84. The trainees 9 include, for example, a pilot 91, a copilot 92, a hoist operator 93, and a descender 94. When the trainees are not distinguished from each other, these trainees will be hereinafter referred to simply as "trainees 9." The cooperative training is training performed by the trainees 9 in cooperation. The airframe 80, the rescue band 83, and the rescue requester 88, for example, are objects in a simulation image, and characters assigned to these objects are shown in FIGS. 7 through 18 (except for FIGS. 8, 14, and 17), and the same holds hereinafter.

The training terminals 1 is terminals for the trainees 9. One training terminal 1 is allocated to each trainee 9. Each training terminal 1 generates a simulation image for an associated trainee 9. This simulation image includes avatars of the trainees 9 linked to actions of the trainees 9 in real space. For example, each training terminal 1 generates a simulation image from a first-person viewpoint of the associated trainee 9. That is, the training terminals 1 generate simulation images from different viewpoints in the common VR space. In this example, four training terminals 1 for four trainees 9 are provided.

A VR display device 2 is connected to each of the training terminals 1. The VR display device 2 displays a simulation image generated by the training terminal 1. The VR display device 2 is mounted on the head of the trainee 9. The VR display device 2 is, for example, a head mounted display (HMD). The HMD may be a goggle-shaped device having a display and dedicated for VR, or may be configured by attaching a smartphone or a portable game device to a holder mountable on the head. The VR display device 2 displays a three-dimensional image including an image for the right eye and an image for the left eye. The VR display device 2 may include a headphone 28 and a microphone 29. Each trainee 9 has a conversation with other trainees 9 through the headphone 28 and the microphone 29. The trainee 9 can listen to sound necessary for simulation through the headphone 28.

The VR training system 100 also includes operation devices to be used by the trainees 9 in simulation training. The trainees 9 operate the operation devices depending on training contents. The operation devices are appropriately changed depending on the operation contents of the trainees 9. For example, operation devices of the pilot 91 and the copilot 92 are piloting devices 3A. The operation devices of the hoist operator 93 and the descender 94 are controllers 3B. The VR training system 100 includes a piloting device 3A for the pilot 91 and a piloting device 3A for the copilot 92. The VR training system 100 includes two controllers 3B for the hoist operator 93 and two controllers 3B for the descender 94.

The piloting devices 3A are operated by the trainees 9 who pilot an aircraft in the trainees 9, that is, the pilot 91 or the copilot 92. The piloting devices 3A receive an operation input from the pilot 91 or the copilot 92. Specifically, each piloting device 3A includes a control stick 31, pedals 32, and a collective pitch lever 33 (hereinafter referred to as a "CP lever 33"). Each of the control stick 31, the pedals 32, and the CP lever 33 has a sensor for detecting the amount of operation. Each sensor outputs an operation signal in accordance with the amount of operation. Each piloting device 3A further includes a seat 34. The pilot 91 or the copilot 92 operates the piloting device 3A so that the location and posture of the aircraft in the simulation image, specifically the helicopter, is thereby changed. The piloting devices 3A are connected to an airframe calculating terminal 5. That is, operation signals from the control stick 31, the pedals 32, and the CP lever 33 are input to the airframe calculating terminal 5.

The airframe calculating terminal 5 calculates the amount of movement and the amount of change of posture of the aircraft airframe 80 based on the operation input through the piloting devices 3A. The airframe calculating terminal 5 is included in the VR training system 100 in order to reduce calculation loads of the training terminals 1. The airframe calculating terminal 5 is communicably connected to each of the training terminals 1 and the setting terminal 6. The airframe calculating terminal 5 is connected to the training terminals 1 and the setting terminal 6 by wires through a LAN, for example. The airframe calculating terminal 5 may be wirelessly connected to the training terminals 1 and the setting terminal 6.

The airframe calculating terminal 5 transmits movement amount information on the amount of movement and the amount of change of posture of the airframe 80 to at least one of the training terminal 1 of the pilot 91 and the training terminal 1 of the copilot 92. The training terminal 1 that has received the movement amount information calculates a position and a posture of the airframe 80 in the VR space based on the movement amount information. That is, the airframe calculating terminal 5 and the training terminal 1 receiving the movement amount information configure an airframe terminal 50 that calculates a position and a posture of the airframe 80 of the aircraft in the VR space based on an operation input through the piloting device 3A.

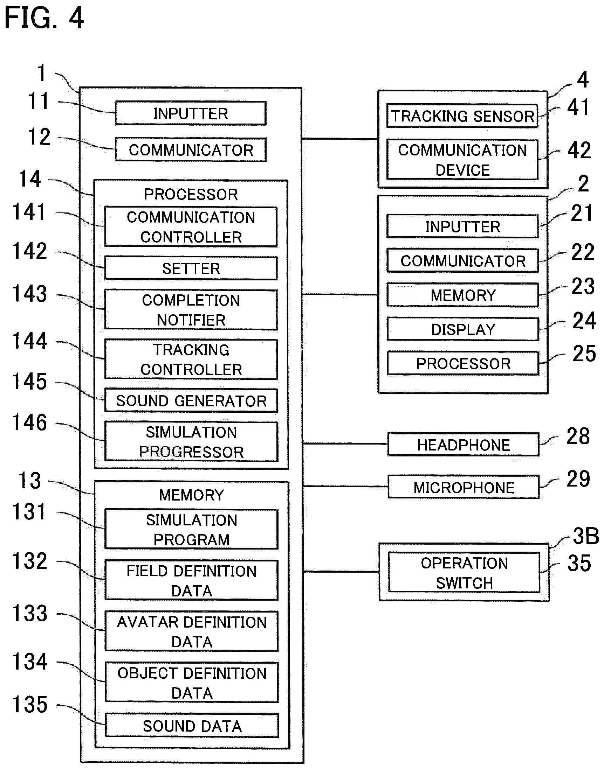

The controllers 3B are portable devices. Each of the trainees 9 (i.e., the hoist operator 93 and the descender 94) carries the controllers 3B with the right hand and the left hand, respectively. Each of the controllers 3B has a motion tracker function. That is, the controllers 3B are sensed by a tracking system 4 described later. Each of the controllers 3B includes an operation switch 35 (see FIG. 4) that receives input operation (including omission operation) from the trainee 9. The operation switch 35 outputs an operation signal in response to the input operation from the trainee 9. The controller 3B is connected to the training terminal 1 of the hoist operator 93 or the descender 94. That is, an operation signal from the operation switch 35 is input to the training terminal 1 of the associated hoist operator 93 or descender 94.

The setting terminal 6 receives an input of setting information from an administrator (e.g., instructor) authorized to perform initial setting. The setting terminal 6 sets the input setting information as initial setting. The setting terminal 6 transmits the setting information to the training terminals 1, and also transmits start notification of simulation training to the training terminals 1. The setting terminal 6 displays a simulation image in training. It should be noted that in this embodiment, the setting terminal 6 generates no simulation image. The setting terminal 6 obtains and displays simulation images generated by the training terminals 1. Accordingly, a person (e.g., instructor) other than the trainees 9 can monitor simulation of training. The setting terminal 6 may obtain information from the training terminals 1 and generate a simulation image of each trainee 9.

The VR training system 100 also includes the tracking system 4. The tracking system 4 detects motions of the trainees 9 in the real space. The tracking system 4 senses the VR display device 2 and the controllers 3B. The tracking system 4 is an outside-in tracking system in this example.

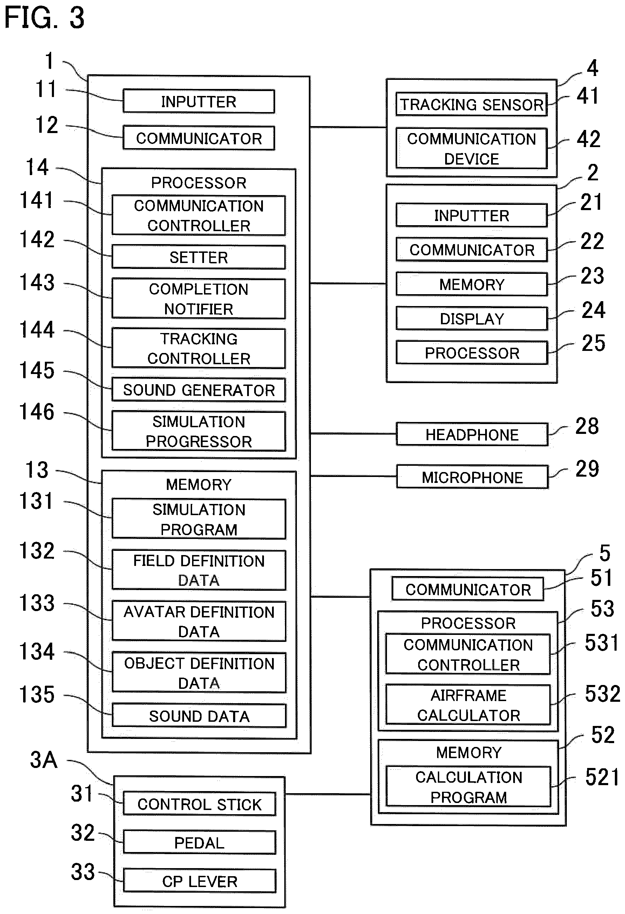

Specifically, the tracking system 4 includes tracking sensors 41, and a communication device 42 (see FIGS. 3 and 4) that receives signals from the tracking sensors 41. The tracking sensors 41 are, for example, cameras. The tracking sensors 41 are disposed to take pictures of real space including the trainees 9 in stereo. Each of the VR display device 2 and the controllers 3B has a luminescent tracking marker. The tracking sensors 41 take photographs of tracking markers of the VR display device 2 and the controllers 3B in stereo.

The tracking system 4 are common to the trainees 9. That is, the common tracking system 4 senses, that is, tracks, the VR display devices 2 and the controllers 3B of the trainees 9.

Image data taken by the tracking sensors 41 is transmitted to the communication device 42. The communication device 42 transmits the received image data to the training terminals 1. The communication device 42 is, for example, a cable modem, a soft modem, or a wireless modem.

Each of the training terminals 1 obtains a position and a posture of an avatar of the associated trainee 9 in the VR space by performing image processing on the image data from the tracking system 4.

In addition, each of the training terminals 1 of the hoist operator 93 and the descender 94 performs data processing on the image data from the tracking system 4 to thereby obtain positions and postures of the hands of the avatar of the associated trainee 9 in the VR space based on the tracking markers of the controllers 3B of the associated trainee 9.

FIG. 3 is a block diagram of the training terminals 1 of the pilot 91 and the copilot 92 and peripheral equipment thereof.

The training terminals 1 of the pilot 91 and the copilot 92 are connected to the VR display device 2, the airframe calculating terminal 5, and the tracking system 4. The piloting devices 3A are connected to the airframe calculating terminal 5.

Each of the training terminals 1 includes an inputter 11, a communicator 12, a memory 13, and a processor 14.

The inputter 11 receives input operation from the trainee 9. The inputter 11 outputs an input signal in accordance with the operation input to the processor 14. For example, the inputter 11 is a keyboard, a mouse, or a touch panel operated by pressing a liquid crystal screen or the like.

The communicator 12 is an interface that communicates with, for example, other terminals. For example, the communicator 12 is a cable modem, a soft modem, or a wireless modem. A communicator 22, a communicator 51, and a communicator 63 described later are also configured in a manner similar to the communicator 12. The communicator 12 implements communication with other terminals, such as other training terminals 1, the airframe calculating terminal 5, and the setting terminal 6.

The memory 13 is a storage medium that stores programs and various types of data and is readable by a computer. The memory 13 is a magnetic disk such as a hard disk, an optical disk such as a CD-ROM or a DVD, or a semiconductor memory. A memory 52 and a memory 64 described later are configured in a manner similar to the memory 13.

The memory 13 stores a simulation program 131, field definition data 132, avatar definition data 133, object definition data 134, and sound data 135, for example.

The simulation program 131 is a program for causing a computer, that is, the processor 14, to implement the functions of generating a simulation image for simulation training in the common VR space and providing the simulation image to the associated trainee 9. The simulation program 131 is read and executed by the processor 14.

The field definition data 132 defines a field where training is performed. For example, the field definition data 132 defines a range of the field, a geographic features of the field, and objects such as an obstacle in the field. The field definition data 132 is prepared for each type of field where training is performed.

The avatar definition data 133 defines an avatar of a self (hereinafter referred to as a "self avatar") and an avatar of other trainees 9 (hereinafter referred to as "other avatars or another avatar"). The avatar definition data 133 is prepared for each type of avatar. The avatar definition data 133 of the self avatar includes not only CG data (e.g., polygon data) of the self avatar but also initial position information (information on an initial position and an initial posture in the VR space).

The position information (including initial position information) of an avatar herein includes position coordinates (x, y, z) of three orthogonal axes in the VR space as positional information, and includes rotation angles (Φ, θ, ψ) about the axes as posture information. The same holds for position information of an object such as the airframe 80 of the helicopter described later.

The object definition data 134 defines objects necessary for training. The object definition data 134 is prepared for each type of object. For example, the object definition data 134 is prepared for the airframe 80 of the helicopter, the rescue band 83, the hoist cable 82, the hoisting machine 84, the boom 81, the pendant-type operator, a rescue requester 88, the ground surface, and so forth.

The sound data 135 is data on sound effects such as flight sound of a helicopter during simulation.

The processor 14 includes processors such as a central processing unit (CPU), a graphics processing unit (GPU), and/or a digital signal processor (DSP), and semiconductor memories such as a VRAM, a RAM, and/or a ROM. A processor 25, a processor 53, and a processor 65 are configured in a manner similar to the processor 14.

The processor 14 reads and executes programs stored in the memory 13 to thereby collectively control parts of the training terminals 1 and implement functions for providing simulation images. Specifically, the processor 14 includes a communication controller 141, a setter 142, a completion notifier 143, a tracking controller 144, a sound generator 145, and a simulation progressor 146 as functional blocks.

The communication controller 141 performs a communication process with an external terminal or a device through the communicator 12. The communication controller 141 performs data processing on data communication.

The setter 142 receives setting information on generation of the simulation image from the setting terminal 6, and sets setting information. The setter 142 sets various types of setting information as initial setting.

When setting of setting information by the setter 142 is completed, the completion notifier 143 transmits a setting completion notification of the setting information to the setting terminal 6.

The tracking controller 144 calculates a position and a posture of a self avatar that is an avatar of the associated trainee 9 in the VR space based on a detection result of the tracking system 4. The tracking controller 144 performs various calculation processes regarding tracking based on image data from the tracking sensors 41 input through the communication device 42. Specifically, the tracking controller 144 performs image processing on the image data to thereby track the tracking marker of the VR display device 2 of the associated trainee 9 and obtain the position and the posture of the trainee 9 in the real space. From the position and the posture of the trainee 9 in the real space, the tracking controller 144 obtains a position and a posture of the self avatar in the VR space based on a predetermined coordinate relationship. Information on the position and the posture of the self avatar in the VR space obtained by the tracking controller 144 will be referred to as position information. The "position and the posture of the avatar" and ""the position of the avatar" will be hereinafter referred to as the "position and the posture in the VR space" and "the position in the VR space," respectively.

The sound generator 145 reads the sound data 135 from the memory 13, generates produces sound in accordance with progress of simulation.

The simulation progressor 146 performs various calculation processes regarding progress of simulation. For example, the simulation progressor 146 generates a simulation image. The simulation progressor 146 reads the field definition data 132 and the object definition data 134 from the memory 13 based on initial setting of the setter 142, and generates a simulation image obtained by synthesizing an object image on a field image.

The simulation progressor 146 reads the avatar definition data 133 associated with the self avatar from the memory 13, and synthesizes self avatar (e.g., hands and feet of the self avatar) on the VR space based on position information of the self avatar, thereby generating a simulation image. Regarding the self avatars of the pilot 91 and the copilot 92, a state in which the self avatars are seated on a pilot's seat and a copilot's seat in the VR space may be maintained. That is, in the simulation image, the positions of the self avatars of the pilot 91 and the copilot 92 in the airframe 80 are fixed, and only the heads of the self avatars may be operated (rotated and tilted). In this case, the simulation progressors 146 of the training terminals 1 of the pilot 91 and the copilot 92 may not generate images of the self avatars.

In addition, the simulation progressor 146 acquires position information of other avatars that are avatars of the trainees 9 associated with other training terminals 1 in the training terminals 1 from the other training terminals 1, and based on the acquired position information, produces the other avatars in the VR space. Specifically, the simulation progressor 146 reads the avatar definition data 133 associated with the other avatars from the memory 13 and, based on the position information of the other avatars acquired from the other training terminals 1, syntheses the other avatars on the VR space to thereby generate a simulation image.

The simulation progressor 146 receives start notification of simulation training from the setting terminal 6, and starts simulation training. That is, the simulation progressor 146 starts training in the simulation image. The simulation progressor 146 controls progress of simulation of cooperative training during simulation training.

Specifically, the simulation progressor 146 calculates a position of a posture of the airframe 80 in the VR space based on movement amount information from the airframe calculating terminal 5 described later (information on the amount of movement and the amount of change of posture of the airframe in response to an operation input of the piloting device 3A). The simulation progressor 146 converts the amount of movement and the amount of change of posture of the airframe from the airframe calculating terminal 5 to the amount of movement and the amount of change of posture of the airframe 80 in a coordinate system of the VR space, and calculates a position and a posture of the airframe 80 in the VR space. Accordingly, in accordance with the operation inputs from the piloting devices 3A, the helicopter moves, that is, flies, in the VR space.

The calculation of the position and the posture of the airframe 80 in the VR space is executed by one of the training terminals 1 of the pilot 91 and the copilot 92 in which the piloting function of the airframe is effective. Which one of the training terminals 1 of the pilot 91 and the copilot 92 in which the piloting function is effective is switchable. In general, the piloting function of the training terminal 1 of the pilot 91 is set to be effective. In some cases, the piloting function of the training terminal 1 of the copilot 92 is set to be effective depending on the training situation.

The simulation progressor 146 causes the self avatar to operate in the VR space based on position information from the tracking controller 144, and causes other avatars to operate in the VR space based on position information of the other avatars received from the other training terminals 1. In a case where the self avatars of the pilot 91 and the copilot 92 are fixed at the pilot's seat and the copilot's seat in the VR space, only the heads of the self avatars move (turn and tilt). The self avatars of the pilot 91 and the copilot 92 do not necessarily move only in the heads, and may move in the VR space based on position information from the tracking controller 144 in a manner similar to the other avatars.

In addition, the simulation progressor 146 changes a position or an angle of a frame of a simulation image to be displayed in accordance with the change of orientation of the head of the pilot 91 or the copilot 92 based on position information from the tracking controller 144. The simulation progressor 146 outputs the generated simulation image to the VR display device 2 and the setting terminal 6. At this time, the simulation progressor 146 outputs sound generated by the sound generator 145 to the headphone 28 and the setting terminal 6 when necessary.

The VR display device 2 includes an inputter 21, the communicator 22, a memory 23, a display 24, and a processor 25.

The inputter 21 receives an operation input from the trainee 9. The inputter 21 outputs an input signal in accordance with an operation input to the processor 25. For example, the inputter 21 is an operation button or a slide switch.

The communicator 22 is an interface that implements communication with the training terminal 1.

The memory 23 is a storage medium that stores programs and various types of data and is readable by a computer. The memory 23 is, for example, a semiconductor memory. The memory 23 stores programs and various types of data for causing a computer, that is, the processor 25, to implement functions for displaying a simulation image on the display 24.

The display 24 is, for example, a liquid crystal display or an organic EL display. The display 24 can display an image for the right eye and an image for the left eye.

The processor 25 reads and executes programs stored in the memory 23 to thereby collectively control parts of the VR display device 2 and implement functions for causing the display 24 to display a simulation image.

The airframe calculating terminal 5 includes the communicator 51, the memory 52, and the processor 53. The airframe calculating terminal 5 receives operation signals output from the piloting devices 3A. Specifically, each of the control stick 31, the pedals 32, and the CP lever 33 inputs an operation signal in accordance with the amount of depression and the amount of operation of the switch. The airframe calculating terminal 5 calculates the amount of movement and the amount of change of posture of the airframe in accordance with the amount of operation of the piloting device 3A, and outputs movement amount information.

The communicator 51 is an interface that performs communication with, for example, the training terminal 1.

The memory 52 stores, for example, a calculation program 521. The calculation program 521 is a program for causing a computer, that is, the processor 53, to implement functions for calculating a position and a posture of the airframe 80 of the aircraft in the VR space. The calculation program 521 is read out and executed by the processor 53.

The processor 53 reads and executes programs stored in the memory 52 to thereby collectively control parts of the airframe calculating terminal 5 and implement functions for calculating the amount of movement and the amount of change of posture of the airframe 80. Specifically, the processor 53 includes a communication controller 531 and an airframe calculator 532 as functional blocks.

The communication controller 531 executes a communication process with, for example, the training terminal 1 through the communicator 51. The communication controller 531 executes data processing on data communication.

The airframe calculator 532 calculates the amount of movement and the amount of change of posture of the airframe 80 based on operation signals from the piloting devices 3A. Specifically, based on operation signals from the control stick 31, the pedals 32, and the CP lever 33, the airframe calculator 532 calculates the amount of movement and the amount of change of posture of the airframe 80 in accordance with the amounts of depression and amounts of operation of the switches of the control stick 31, the pedals 32, and the CP lever 33. The airframe calculator 532 transmits movement amount information on the calculated amount of movement and the calculated amount of change of posture of the airframe 80 to the training terminal 1.

FIG. 4 is a block diagram of the training terminals 1 of the hoist operator 93 and the descender 94 and peripheral equipment thereof.

The training terminals 1 of the hoist operator 93 and the descender 94 are connected to the VR display device 2, the controllers 3B, and the tracking system 4. Each of the controllers 3B includes an operation switch 35. Operation signals of the operation switches 35 are input to the training terminals 1.

Basic configurations of the training terminals 1 of the hoist operator 93 and the descender 94 are similar to those of the training terminals 1 of the pilot 91 and the copilot 92. It should be noted that processing in the training terminals 1 of the hoist operator 93 and the descender 94 is slightly different from processing in the training terminals 1 of the pilot 91 and the copilot 92 due to the difference in training between the group of the hoist operator 93 and the descender 94 and the group of the pilot 91 and the copilot 92.

Specifically, the tracking controller 144 calculates a position and a posture of the self avatar that is an avatar of the associated trainee 9 in the VR space based on a detection result of the tracking system 4. The tracking controller 144 performs various calculation processes regarding tracking based on image data from the tracking sensors 41 input through the communication device 42. Specifically, the tracking controller 144 performs image processing on the image data to thereby track a tracking marker of the VR display device 2 of the associated trainee 9 and obtain a position and a posture of the trainee 9 in the real space. From the position and posture of the trainee 9 in the real space, the tracking controller 144 obtains a position and a posture of the self avatar based on the predetermined coordinate relationship. In addition, the tracking controller 144 performs image processing on the image data to thereby track the tracking markers of the controllers 3B and obtain positions and postures of the hands of the trainee 9 in the real space. From the positions and the postures of the hands of the trainees 9 in the real space, the tracking controller 144 obtains positions and postures of the hands of the self avatar based on the predetermined coordinate relationship. That is, the tracking controllers 144 of the training terminals 1 of the hoist operator 93 and the descender 94 obtain positions and postures of the self avatars and positions and postures of the hands of the self avatars as position information.

The simulation progressor 146 generates a simulation image and controls progress of simulation of cooperative training in a manner similar to the training terminals 1 of the pilot 91 and the copilot 92. It should be noted that, unlike the pilot 91 and the copilot 92 who remain seated on the pilot's seat and the copilot's, the hoist operator 93 and the descender 94 can move inside and outside the aircraft. Thus, the simulation progressor 146 freely moves the self avatar in the VR space. Based on the position information from the tracking controller 144, the simulation progressor 146 changes a position or an angle of a frame of a simulation image to be displayed in accordance with the change of the position or orientation of the head of the hoist operator 93 or the descender 94.

In addition, in response to an operation signal from the operation switch 35 of the controller 3B, the simulation progressor 146 causes the self avatar to perform processing in accordance with the operation signal in the simulation image. For example, the simulation progressor 146 causes the self avatar to open or close a door of the helicopter.

The simulation progressor 146 associated with the hoist operator 93 causes the self avatar to operate the hoisting machine 84 with the pendant-type operator. That is, the simulation progressor 146 associated with the hoist operator 93 lifts and lowers the rescue band 83 in the simulation image. Further, while the rescue band 83 is being lifted or lowered, that is, the avatar of the descender 94 is coupled to the hoist cable 82, the simulation progressor 146 associated with the hoist operator 93 transmits position information of a coupling portion between the avatar and the hoist cable 82 to at least the simulation progressor 146 associated with the descender 94.

Furthermore, when an omission operation to the controller 3B by the trainee 9 is performed in a series of actions in simulation training, each of the simulation progressors 146 associated with the hoist operator 93 and the descender 94 omits a predetermined action of the self avatar, and updates a simulation image from a state before the predetermined action to a state after the predetermined action. That is, the simulation progressor 146 updates the state of the self avatar and/or the state of objects from the state before the predetermined action to the state after the predetermined action.

An input operation to the controller 3B by the trainee 9 includes an omission operation. The omission operation is an input command for omitting a predetermined action in a series of actions in simulation training. The trainee 9 can perform the omission operation by operating the operation switch 35 of the controller 3B. The controller 3B transmits an operation signal in accordance with the omission operation to the training terminal 1. When the operation signal from the controller 3B is input to the inputter 11, the simulation progressor 146 performs processing of omitting the predetermined action of the avatar.

The series of actions in simulation training is divided into first type actions that cannot be omitted and second type actions that can be omitted. The predetermined action of the avatar described above is a second type action. The first type actions are defined as actions (training) that can obtain high training effects even in training using VR space. The second type actions are defined as actions (training) that hardly obtain training effects in training (especially cooperative training) using VR space.

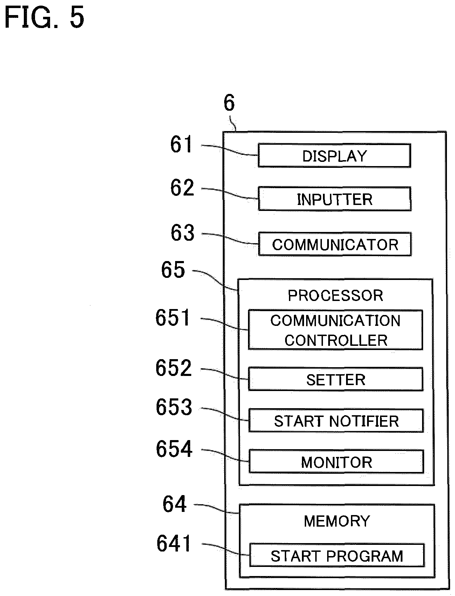

FIG. 5 is a block diagram of the setting terminal 6 and peripheral equipment thereof.

The setting terminal 6 includes a display 61, an inputter 62, the communicator 63, the memory 64, and the processor 65.

The display 61 is, for example, a liquid crystal display, an organic EL display, or a projector and a screen.

The inputter 62 accepts an input operation of an administrator (e.g., instructor) authorized to perform initial setting. The inputter 62 is, for example, a keyboard, a mouse, or a touch panel.

The communicator 63 is an interface that implements communication with, for example, the training terminal 1.

The memory 64 includes a start program 641, for example. The start program 641 is a program for causing a computer, that is, the processor 65, to implement functions for causing the training terminals 1 that provides simulation images for performing simulation training in the common VR space to associated trainees to start simulation training. The start program 641 is read out and executed by the processor 65.

The processor 65 reads and executes programs stored in the memory 64 to thereby collectively control parts of the setting terminal 6 and implement functions for performing initial setting concerning simulation. Specifically, the processor 65 includes a communication controller 651, a setter 652, a start notifier 653, and a monitor 654 as functional blocks.

The communication controller 651 performs a communication process with an external terminal or a device through the communicator 63. The communication controller 651 executes data processing on data communication.

The setter 652 accepts an input of various types of setting information on initial setting necessary for generating a simulation image from a user, and sets the input setting information as initial setting. The setter 652 causes the display 61 to display a setting input screen stored in the memory 64. The setter 652 causes the memory 64 to store setting information input to the setting input screen through the inputter 62 as initial setting. The setter 652 transmits setting information to the training terminals 1.

When the start notifier 653 receives completion notification of setting the setting information from all the training terminals 1, the start notifier 653 transmits start notification for starting simulation training to the training terminals 1. Based on the transmission of the start notification from the start notifier 653 to all the training terminals 1, training starts in the training terminals 1.

The monitor 654 receives a simulation image from each of the training terminals 1. That is, the monitor 654 receives a simulation image in a first-person viewpoint in accordance with each trainee 9. The monitor 654 causes the display 61 to display the simulation image of one of the trainees 9 in a first-person viewpoint. Alternatively, the monitor 654 causes the display 61 to display the simulation images of all the trainees 9 in first-person viewpoints dividedly. In the case where all the simulation images in the first-person viewpoints are displayed dividedly, the monitor 654 may cause the display 61 to display one of the simulation images in the first-person viewpoints in accordance with selection operation through the inputter 62.

### <Actions in Simulation Training>

An example of actions in simulation training in the VR training system 100 described above will be described. This simulation training is cooperative training performed by four trainees 9 (i.e., the pilot 91, the copilot 92, the hoist operator 93, and the descender 94), and the helicopter flies to a point where the rescue requester 88 is present to rescue the rescue requester 88.

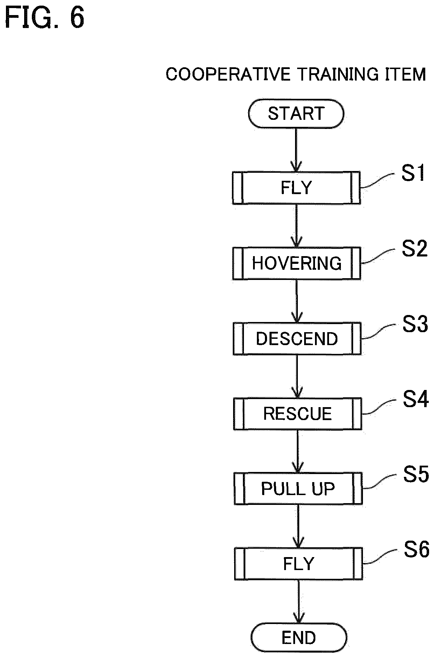

In the simulation training (cooperative training), training processes are conducted in the order shown in FIG. 6. FIG. 6 is a flowchart showing a flow of training processes in the simulation training. The simulation training starts in response to reception of start notification from the setting terminal 6 by the training terminals 1.

In the simulation training, first, flight training is performed (step S1). In this flight training, the helicopter files from a departure point to a point where the rescue requester is present (destination). The pilot 91 flies the helicopter in the simulation image by operating the piloting device 3A. The copilot 92 performs a safety check during flight or piloting assistance with the piloting device 3A while watching the simulation image. Other trainees such as the hoist operator 93 also perform safety checks during flight.

In this flight training, the simulation progressor 146 associated with the pilot 91 or the copilot 92 changes the amount of movement and posture of the airframe 80 in the simulation image based on a calculation result of the airframe calculating terminal 5. The simulation progressors 146 individually associated with the four trainees 9 cause the avatars to perform actions necessary for piloting or safety checks linked to actions of the trainees 9 in real space. In the flight training, in the simulation progressor 146 associated with the hoist operator 93 or the descender 94, for example, a simulation image as illustrated in FIG. 7 is generated as an example. This simulation image represents a state where the hoist operator 93 or the descender 94 sees the pilot's seat side in the airframe 80, and the avatar 91A of the pilot 91 and the avatar 92A of the copilot 92 seated on the pilot's seats are displayed. In this manner, in the flight training in step S1, a pilot action and a safety check action of the helicopter are set as the first type actions that cannot be omitted.

When the helicopter arrives at the point of the rescue requester 88, the flight training shifts to hovering training (step S2). In the hovering training, the helicopter is kept stopped at a predetermined position in the air. In the hovering training, a pilot action by the pilot 91 and a safety check action by, for example, the copilot 92 are performed in a manner similar to the flight training in step S1. The pilot action and the safety check action of the helicopter in the hovering training are also set as the first type actions.

If hovering flight is stably conducted, the hovering training shifts to descent training (step S3). In the descent training, the hoist operator 93 allows the descender 94 to descend from the airframe 80 by operating the hoisting machine 84. That is, after the descender 94 is coupled to the hoist cable 82 hung from the boom 81, the hoist operator 93 lowers the hoist cable 82 by operating the hoisting machine 84 so that the descender 94 thereby descends.

A descent training process by the training terminal 1 of the descender 94 in this descent training will be described. FIG. 8 is a flowchart showing a descent training process in a training terminal of a descender. Prior to the descent training process, the hoist operator 93 or the descender 94 operates the operation switch 35 of the controller 3B to cause the self avatar to open or close a door of the helicopter in the simulation image. The hoist operator 93 operates the operation switch 35 of the controller 3B to cause the self avatar to hold a pendant-type operator in the simulation image.

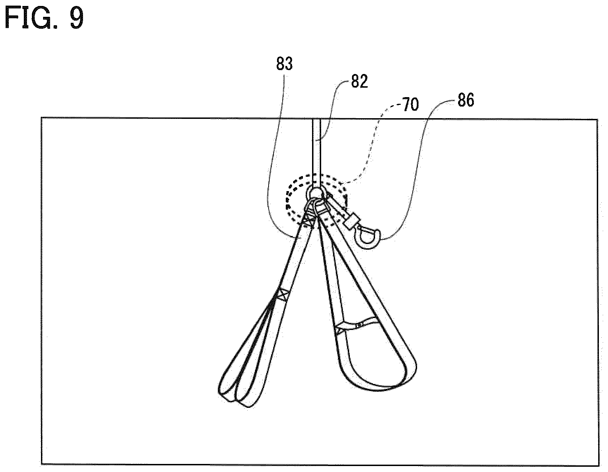

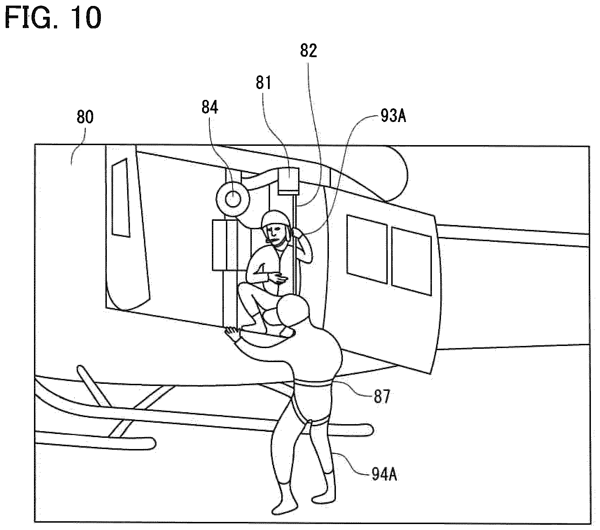

First, in step Sa1, the rescue band 83 as an object is selected. Specifically, the descender 94 selects the rescue band 83 in the simulation image by operating the controller 3B. This selection action with the controller 3B is performed such that a pointer 70 is displayed in the simulation image by half pressing the operation switch 35 as illustrated in FIG. 9 and is moved to the position of the rescue band 83 coupled to the hoist cable 82 by moving the controller 3B. The simulation progressor 146 receives an operation signal in accordance with the half-pressed state of the operation switch 35 from the controller 3B to thereby display the pointer 70 in the simulation image. The simulation image in FIG. 9 shows the rescue band 83 and a carabiner 86 coupled to the hoist cable 82. The rescue band 83 is tied to the rescue requester 88 in lifting the rescue requester 88 with the hoist cable 82. The carabiner 86 is coupled to the band 87 (see FIG. 10) worn by the avatar 94A of the descender 94 beforehand. That is, the carabiner 86 is a coupling portion coupling the avatar 94A of the descender 94 to the hoist cable 82. The rescue band 83 and the carabiner 86 are coupled to substantially the same position of the hoist cable 82, and thus, selection of the rescue band 83 in step Sa1 described above is substantially equivalent to selection of the carabiner 86.

In next step Sa2, the simulation progressor 146 determines whether the selected position is within a couplable range of the carabiner 86 or not. Specifically, the simulation progressor 146 determines whether a distance between the position selected with the controller 3B (position of the pointer 70) and the position of the avatar 94A is within a predetermined value or not to thereby determine whether the selected position is within the couplable range of the carabiner 86 or not.

For example, when the simulation progressor 146 determines that the selected position is within the couplable range, that is, when the avatar 94A moves to a position at which the couplable range can be specified by the pointer 70 and the pointer 70 specifies a position within the couplable range, the color of the pointer 70 changes. The descender 94 visually recognizes the change of color of the pointer 70 in the simulation image to thereby perform determination action of the selected position described later. Here, when the couplable range is specified by the pointer 70, the color of not the pointer 70 but the rescue band 83 and/or the carabiner 86 as an object may be changed, and it is sufficient that a change in the simulation image can be visually recognized by selection.

If the selected position is determined to be out of the couplable range, that is, if the distance between the selected position and the position of the avatar 94A exceeds the predetermined value, the process returns to step Sa1. That is, the descender 94 continues to move in real space and continues to move the avatar 94A until the color of the pointer 70 in the simulation image changes. In this process, the descender 94 needs an action of approaching the position of the rescue band 83 (carabiner 86) to some degree in the airframe 80, and thus, an action of selecting the rescue band 83 is useful as a part of training actions in the airframe 80.

If the selected position is determined to be within the couplable range, that is, if the distance between the selected position and the position of the avatar 94A is within the predetermined value, the descender 94 determines the selected position (step Sa3). Specifically, the descender 94 determines the position selected by the pointer 70 in the simulation image by operating the controller 3B. This determination action with the controller 3B is performed by fully pressing the half-pressed operation switch 35. In this manner, a series of actions including the selection action of half pressing the operation switch 35 to display the pointer 70 by the descender 94 and the determination action of fully pressing the operation switch 35 to determine the selected position by the descender 94 corresponds to the omission operation described above.

Subsequently, in step Sa4, the simulation progressor 146 updates (switches) the simulation image from a state before a predetermined action to a state after the predetermined action. The predetermined action as used in step Sa4 refers to an action in which the avatar 94A of the descender 94 couples the avatar 94A itself to the hoist cable 82. That is, the simulation progressor 146 updates the simulation image (see FIG. 9) representing a state before the avatar 94A couples the band 87 of the avatar 94A to the carabiner 86 to a simulation image (see FIG. 10) representing a state where the avatar 94A couples the band 87 of the avatar 94A to the carabiner 86. In other words, the simulation progressor 146 updates the state of the avatar 94A from the state before the avatar 94A is coupled to the carabiner 86 to the state after the avatar 94A is coupled to the carabiner 86. FIG. 9 is a simulation image from a first-person viewpoint. FIG. 10 is a simulation image not from a first-person viewpoint but from a third-person viewpoint for convenience of description. The simulation image of FIG. 10 shows the avatar 94A of the descender 94 coupled to the hoist cable 82 hung from the boom 81 of the airframe 80 and the avatar 93A of the hoist operator 93 operating the hoisting machine 84 to lift or lower the rescue band 83 and the carabiner 86.

More specifically, when the simulation progressor 146 determines the selected position, that is, receives an operation signal in accordance with an action of fully pressing the operation switch 35 from the controller 3B, the simulation progressor 146 updates the state of the avatar 94A. In updating the state of the avatar 94A described above, the simulation progressor 146 also replaces position information of the rescue band 83 as position information of the avatar 94A. That is, position information of the coupling portion (i.e., the carabiner 86) between the avatar 94A and the hoist cable 82 is replaced as the position information of the avatar 94A. In other words, the position of the rescue band 83 is recognized as the position of the avatar 94A. Here, since the rescue band 83 and the carabiner 86 are located substantially at the same position, the position information of the rescue band 83 substantially corresponds to position information of the carabiner 86. This holds for position information of the rescue band 83 described later. In this manner, in the series of actions of the simulation training, the coupling action of the hoist cable 82 by the avatar 94A as the predetermined action is omitted, and the state of the avatar 94A is updated. That is, in the descent training, the action of coupling the avatar 94A to the hoist cable 82 is set as the second type action that can be omitted.

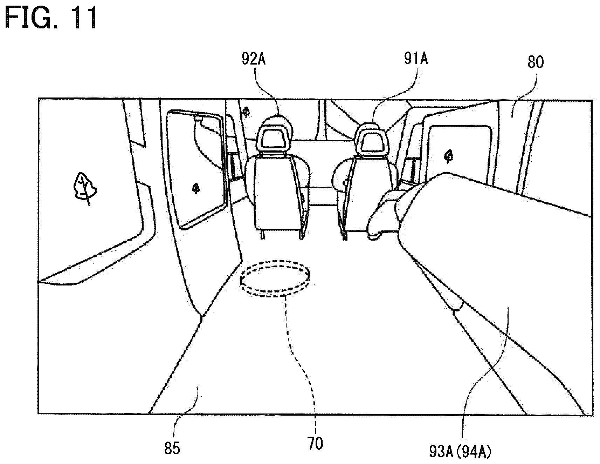

In this embodiment, an action in which the avatars 93A and 94A of the hoist operator 93 and the descender 94 move in the airframe 80 is set as the second type action. That is, the moving action of the self avatar of, for example, the hoist operator 93 in the airframe 80 is omitted by omission operation by the hoist operator 93 and the descender 94 with the controllers 3B. For example, as illustrated in FIG. 11, the hoist operator 93, for example, displays the pointer 70 in the simulation image by half pressing the operation switch 35, and selects (indicates) a movement position by moving the pointer 70 to a position as a destination of movement (position on a floor 85 in the airframe 80). When the color of the pointer 70 changes, the hoist operator 93, for example, fully presses the operation switch 35 to thereby determine the selected position (movement position). Then, the simulation progressor 146 associated with the hoist operator 93, for example, updates the simulation image (see FIG. 11) representing a state before the avatar 93A, for example, moves to a simulation image representing a state after the avatar 93A, for example, has moved to the selected position. That is, the state of the self avatar is updated from the state before movement to the state after the movement. The simulation image of FIG. 11 shows the avatar 91A of the pilot 91 seated on the pilot's seat and the avatar 92A of the copilot 92.

Such omission of movement action of the avatars in the airframe 80 can also be performed in step Sa2 described above. That is, the rescue band 83 may be selected by the pointer after the avatar 94A of the descender 94 has been moved to the vicinity of the door, for example, in the airframe 80 by an omission operation with the controller 3B. In this manner, in the airframe 80, the self avatar can be moved by movement of the trainee 9 in real space and a movement action of the self avatar can be omitted by an omission operation of the trainee 9 with the controller 3B.

Subsequently, in step Sa5, the simulation progressor 146 receives position information (e.g., movement information) of the rescue band 83 from the training terminal 1 of the hoist operator 93. Accordingly, the simulation progressor 146 causes the avatar 94A to move (descend) with movement (descending) of the rescue band 83 in the simulation image. In this manner, in the simulation image of the descender 94, the avatar 94A descends together with the rescue band 83 (step Sa6).

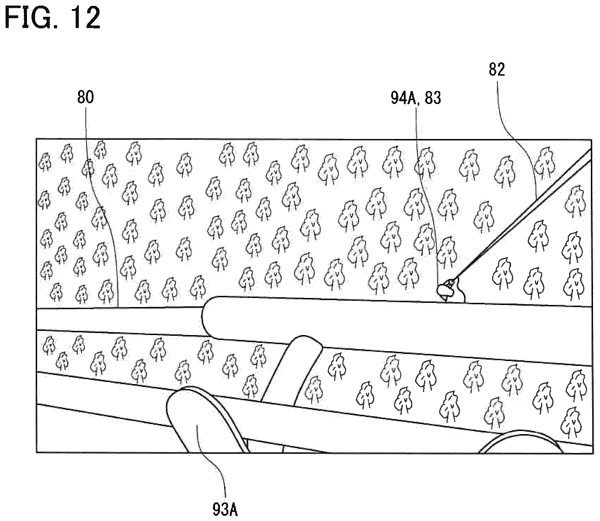

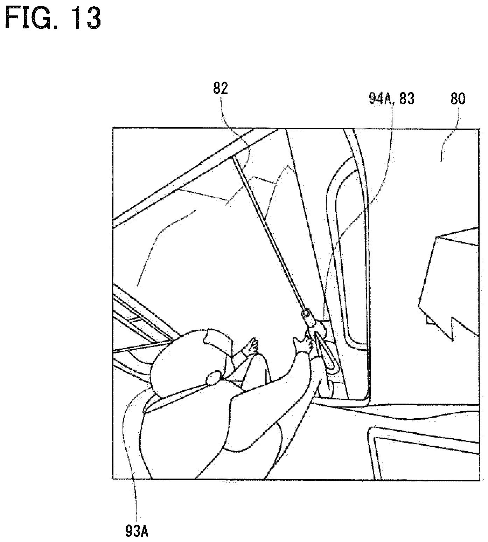

In the simulation progressor 146 of the training terminal 1 of the hoist operator 93, with update of the simulation image of the descender 94 described above, the simulation image is updated to a simulation image representing a state where the avatar 94A of the descender 94 (i.e., another avatar) is coupled to the hoist cable 82. Similarly, in each of the simulation progressors 146 of the training terminals 1 of the pilot 91 and the copilot 92, with the update of the simulation image of the descender 94 described above, the simulation image is updated to a simulation image representing a state where the avatar 94A of the descender 94 (i.e., another avatar) is coupled to the hoist cable 82. The hoist operator 93 operates the pendant-type operator in the simulation image by operating the controller 3B to thereby gradually lower the rescue band 83. At this time, in the simulation progressor 146 associated with the hoist operator 93, a simulation image as illustrated in FIG. 12 is generated as an example. This simulation image represents a state where the hoist operator 93 watches, from the inside of the airframe 80, the avatar 94A of the descender 94 descending together with the rescue band 83 hung by the hoist cable 82. In the simulation progressor 146 associated with the pilot 91 or the copilot 92, a simulation image as illustrated in FIG. 13 is generated as an example. This simulation image represents a state where the pilot 91 or the copilot 92 watches the avatar 93A of the hoist operator 93 lowering the rescue band 83 in the airframe 80 and the avatar 94A of the descender 94 descending together with the rescue band 83 coupled to the hoist cable 82.

While the avatar 94A descends together with the rescue band 83, the position of the avatar 94A is fixed at the position of the rescue band 83, but the head and hands of the avatar 94A are movable. Thus, when the descender 94 waves the hands in real space, the avatar 94A is caused to wave the hands similarly, and training of sending a sign to the hoist operator 93 can be performed. That is, in the descent training, the action in which the descender 94 descends with the hoisting machine 84 and the action in which the hoist operator 93 operates the hoisting machine 84 to cause the descender 94 to descend are set as the first type actions.

Then, in step Sa7, the position of the ground surface is selected in the simulation image. Specifically, when the avatar 94A descends to the vicinity of the ground surface in the simulation image, the descender 94 operates the controller 3B to select the position of the ground surface in the simulation image. This selection action with the controller 3B is similar to the selection action of the rescue band 83 described above. That is, the pointer 70 is displayed in the simulation image by half pressing the operation switch 35, and the pointer 70 is moved to the position of the ground surface by moving the controller 3B.

Subsequently, in step Sa8, the simulation progressor 146 determines whether the selected position is within a movable range of the avatar 94A or not. Specifically, the simulation progressor 146 determines whether the position selected with the controller 3B (position of the pointer 70) is the ground surface or not (first determination criterion), and if the selected position is the ground surface, it is determined that the descender 94 can land, and the selected position is within the movable range of the avatar 94A. Instead of whether the selected position is the ground surface or not, the first determination criterion may be whether the selected position is a dangerous position such as a cliff or not. In this case, if the selected position is not a dangerous position, it is determined that the descender 94 can land safely, and the selected position is within the movable range of the avatar 94A. The simulation progressor 146 determines whether a distance between the selected position (position of the pointer 70) and the rescue band 83 is within a predetermined value or not (second determination criterion), and if the distance is within the predetermined value, it is determined that the descender 94 can land safely, and the selected position is within the movable range of the avatar 94A. In this example, if the two determination criteria described above are satisfied, the selected position is determined to be within the movable range of the avatar 94A. Any one of the determination criteria may be used depending on training conditions.

In step Sa8, if the selected position is determined to be out of the movable range, the process returns to step Sa7. That is, to satisfy the first determination criterion, the descender 94 moves the pointer 70 with the controller 3B until the color of the pointer 70 in the simulation image changes. To satisfy the second determination criterion, the descender 94 sends a sign to the hoist operator 93 by causing the avatar 94A to wave the hands, for example, and the hoist operator 93 lowers the rescue band 83 in response to the sign of the avatar 94A of the descender 94. This action continues until the color of the pointer 70 in the simulation image changes.

In step Sa8, if the selected position is determined to be within the movable range, the descender 94 determines the selected position (step Sa9). Specifically, the descender 94 determines the position selected by the pointer 70 in the simulation image by operating the controller 3B. The determination action with the controller 3B is similar to the determination action of the position of the rescue band 83 described above. That is, the determination action is performed by fully pressing the half-pressed operation switch 35. In this case, if the simulation progressor 146 determines that the selected position is within the movable range, the simulation progressor 146 changes the color of the pointer 70.

Thereafter, in step Sa10, in a manner similar to step Sa4, the simulation progressor 146 updates (switches) the simulation image from a state before a predetermined action to a state after the predetermined action. The predetermined action as used in step Sa10 is an action in which the avatar 94A of the descender 94 lands on the ground surface and detaches the carabiner 86 (hoist cable 82). That is, the simulation progressor 146 updates the state of the avatar 94A from a state before the avatar 94A lands on the ground surface to a state after the avatar 94A lands on the ground surface and detaches the carabiner 86. In this manner, in the series of actions in the simulation training, the action in which the avatar 94A lands on the ground surface and detaches the carabiner 86 (hoist cable 82) (landing/detaching action of the avatar 94A), which is the predetermined action, is omitted, and the state of the avatar 94A is updated. That is, in the descent training, the landing/detaching action of the avatar 94A is set as the second type action.

In the manner described above, the descent training process by the descender 94 with the training terminal 1 is finished, and the process proceeds to the rescue training (step S4).

In the rescue training, the descender 94 who has landed on the ground surface takes the rescue requester 88 to the rescue band 83 and ties the rescue band 83 to the rescue requester 88.

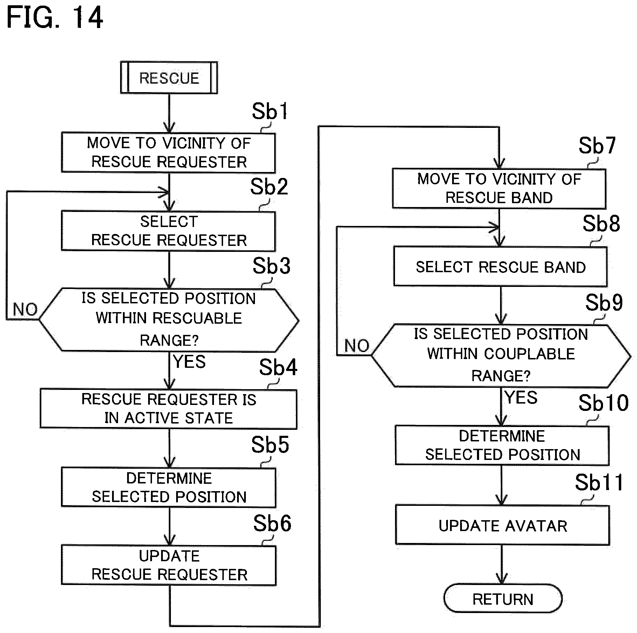

The rescue training process by the descender 94 with the training terminal 1 in the rescue training will be described. FIG. 14 is a flowchart showing a rescue training process in the training terminal 1 of the descender 94. The rescue training process starts from a state where the avatar 94A of the descender 94 lands on the ground surface and detaches the carabiner 86 (hoist cable 82) by the descent training process described above.

First, in step Sb 1, the simulation progressor 146 causes the avatar 94A toward the vicinity of the rescue requester 88 in VR space. That is, the descender 94 takes an action in real space such that the self avatar approaches the rescue requester 88. Based on tracking information of the descender 94 in the tracking controller 144, the simulation progressor 146 causes the avatar 94A to take an action in the VR space.

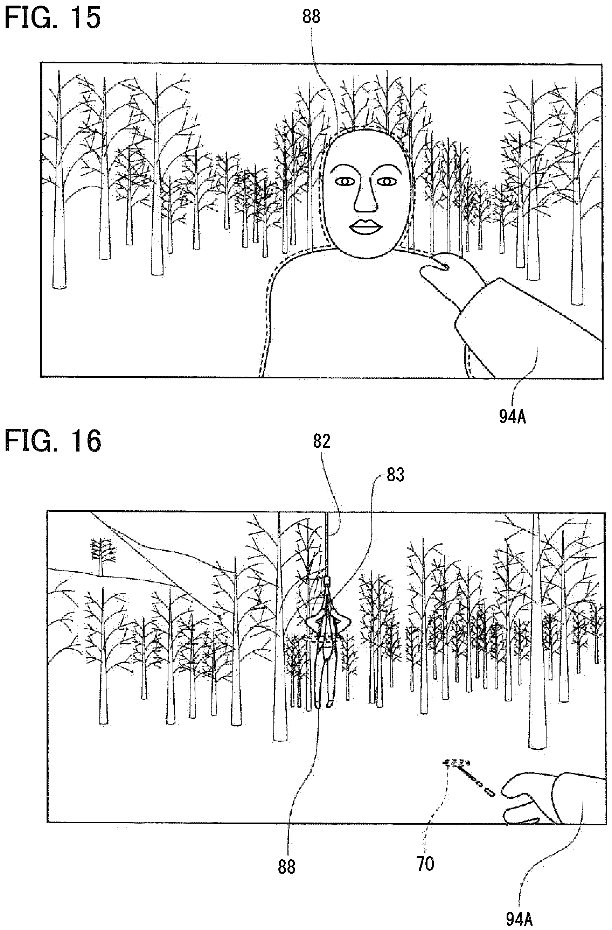

When the descender 94 reaches the vicinity of the rescue requester 88, the descender 94 operates the controller 3B to thereby select the rescue requester 88 in the simulation image (step Sb2). The selection action with the controller 3B is performed by, for example, half pressing the operation switch 35 and moving the controller 3B as illustrated in FIG. 15 to move the "hands of the avatar 94A" to the position of the rescue requester 88. The simulation progressor 146 determines that the descender 94 requests determination on whether the rescue requester 88 is within the rescuable range or not, based on reception of an operation signal in accordance with a half-pressed state of the operation switch 35 from the controller 3B.

Thereafter, in step Sb3, the simulation progressor 146 determines whether the selected position is within the rescuable range of the rescue requester 88 or not. Specifically, the simulation progressor 146 determines whether a position selected with the controller 3B (position of the hands of the avatar 94A) is within a predetermined range in the vicinity including the position of the rescue requester 88. In the simulation progressor 146, the predetermined range in the vicinity including the position of the rescue requester 88 is set as a rescuable range of the rescue requester 88.

If the selected position is determined to be within the rescuable range, the simulation progressor 146 changes the rescue requester 88 to an active state (movable state) (step Sb4). If the simulation progressor 146 determines that the selected position is within the rescuable range, the simulation progressor 146 colors and lights up the contour of the rescue requester 88 in the simulation image as illustrated in FIG. 15, for example. The descender 94 can recognize that the rescue requester 88 enters the active state by visually recognizing the display of the rescue requester 88.

When the rescue requester 88 thus enters the active state, the descender 94 determines a selected position (step Sb5). Specifically, the descender 94 determines the position selected by the "hands of the avatar 94A" in the simulation image by operating the controller 3B. This determination action with the controller 3B is performed by, for example, fully pressing the half-pressed operation switch 35. In this manner, a series of actions including the selection action of half pressing the operation switch 35 to display the hands of the avatar 94A by the descender 94 and the determination action of fully pressing the operation switch 35 to determine the selected position by the descender 94 corresponds to the omission operation described above.

Subsequently, in step Sb6, the simulation progressor 146 updates (switches) the simulation image from a state before a predetermined action to a state after the predetermined action. The predetermined action as used in step Sb6 is a combination of an action in which the avatar 94A of the descender 94 moves the rescue requester 88 to the place of the rescue band 83 and an action in which the avatar 94A ties the rescue band 83 to the rescue requester 88. That is, the simulation progressor 146 updates the state of the rescue requester 88 from the state before the rescue band 83 is moved by the avatar 94A of the descender 94 to the state after the rescue band 83 is tied to the rescue requester 88. For example, the simulation progressor 146 updates the simulation image to a simulation image as illustrated in FIG. 16. This simulation image represents a state where the rescue requester 88 equipped with the rescue band 83 and hung by the hoist cable 82 is seen by the descender 94 from a position at which the rescue requester 88 was present before being moved. Examples of the action in which the avatar 94A of the descender 94 moves the rescue requester 88 to the position of the rescue band 83 include guiding, accompanying, and carrying.

More specifically, when the simulation progressor 146 determines the selected position, that is, receives an operation signal in accordance with the action of fully pressing the operation switch 35 (omission operation) from the controller 3B, the simulation progressor 146 updates the state of the rescue requester 88 as described above. In updating the state of the rescue requester 88, the simulation progressor 146 replaces position information of the rescue band 83 as position information of the rescue requester 88. That is, the position of the rescue band 83 is recognized as the position of the rescue requester 88. In this manner, in the series of actions in simulation training, the predetermined action, that is, the action in which the rescue requester 88 is taken to the position of the rescue band 83 and the rescue band 83 is tied to the rescue requester 88, is omitted, and the state of the rescue requester 88 is updated. That is, in the rescue training, the action in which the avatar 94A moves the rescue requester 88 to the position of the rescue band 83 and the action in which the avatar 94A ties the rescue band 83 to the rescue requester 88 are set as the second type actions that can be omitted.

In next step Sb7, the simulation progressor 146 moves the avatar 94A to the vicinity of the rescue band 83 in the simulation image. That is, the descender 94 takes an action in real space such that the self avatar approaches the rescue band 83. Based on tracking information of the descender 94 in the tracking controller 144, the simulation progressor 146 causes the avatar 94A to take an action in VR space.

When the descender 94 reaches the vicinity of the rescue band 83, the descender 94 operates the controller 3B to thereby select and the rescue band 83 in the simulation image and make determination (steps Sb8 through Sb 10). Steps Sb8 through Sb10 in this rescue training process are similar to steps Sa1 through Sa3 in the descent training process described above. In step Sb8, in a manner similar to step Sa1 in the descent training process, selection of the rescue band 83 is substantially equivalent to selection of the carabiner 86.

Subsequently, in step Sb 11, in a manner similar to step Sa4 in the descent training process, the simulation progressor 146 updates the state of the avatar 94A from a state before the carabiner 86 is coupled to the avatar 94A to a state after the carabiner 86 is coupled to the avatar 94A. In updating the simulation image, the simulation progressor 146 replaces position information of the rescue band 83 as position information of the avatar 94A. In this manner, in the series of actions in simulation training, the coupling action of the carabiner 86 by the avatar 94A as the predetermined action is omitted, and the state of the avatar 94A is updated. That is, in the rescue training, the action in which the avatar 94A couples the avatar 94A itself to the hoist cable 82, that is, the action in which the avatar 94A couples the band 87 of the avatar 94A itself to the carabiner 86, is set as the second type action that can be omitted.

In the manner described above, the rescue training process with the training terminal 1 of the descender 94 is finished, and the process proceeds to pull-up training (step S5).

In the pull-up training, the hoist operator 93 pulls up the descender 94 and the rescue requester 88 into the airframe 80 with the hoisting machine 84.

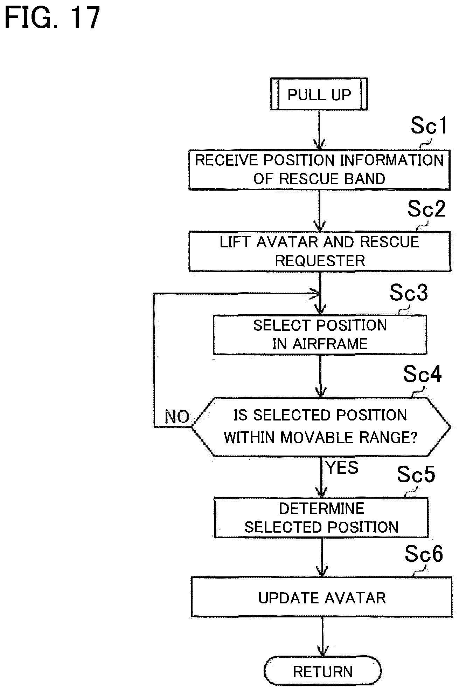

A pull-up training process with the training terminal 1 of the descender 94 in this pull-up training will be described. FIG. 17 is a flowchart showing the pull-up training process in the training terminal 1 of the descender 94. This pull-up training process starts from the state where the avatar 94A of the descender 94 is coupled to the carabiner 86 and the rescue band 83 is tied to the rescue requester 88 by the rescue training process described above.

First, in step Sc1, the simulation progressor 146 receives position information of the rescue band 83 from the training terminal 1 of the hoist operator 93. Accordingly, the simulation progressor 146 moves (lifts) the avatar 94A and the rescue requester 88 with movement (lift) of the rescue band 83. Accordingly, in the simulation image of the descender 94, the avatar 94A and the rescue requester 88 are lifted together with the rescue band 83 (step Sc2).

In the simulation progressors 146 of the training terminals 1 of the hoist operator 93, the pilot 91, and the copilot 92, with the update of the avatar 94A of the descender 94 and the rescue requester 88 described above, the simulation image is updated to a simulation image representing a state where the avatar 94A of the descender 94 (i.e., another avatar) is coupled to the carabiner 86 and the rescue band 83 is tied to the rescue requester 88. The hoist operator 93 operates the pendant-type operator in the simulation image by operating the controller 3B, and gradually lifts the rescue band 83 (hoist cable 82). While the avatar 94A is lifted together with the rescue band 83, the position of the avatar 94A is fixed at the position of the rescue band 83, but the head and hands of the avatar 94A are movable. In the pull-up training, the action in which the descender 94 is lifted by the hoisting machine 84 and the action in which the hoist operator 93 lifts the descender 94 by operating the hoisting machine 84 are set as the first type actions.

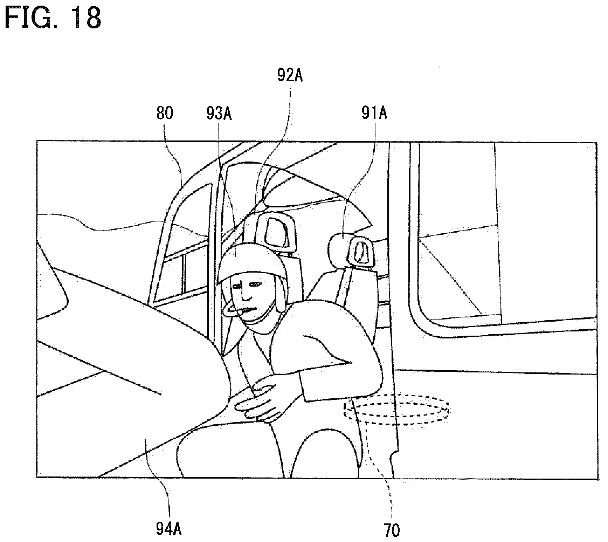

Thereafter, in step Sc3, a position in the airframe 80 is selected in the simulation image. Specifically, when the avatar 94A is lifted to the vicinity of the airframe 80 in the simulation image, the descender 94 operates the controller 3B to select a position in the airframe 80 in the simulation image with the pointer 70 as illustrated in FIG. 18, for example. This selection action with the controller 3B is similar to the selection action in step Sa1 in the descent training process. A simulation image illustrated in FIG. 18 shows the avatar 91A of the pilot 91 and the avatar 92A of the copilot 92 piloting the airframe 80, for example, and the avatar 93A of the hoist operator 93 assisting getting of the avatar 94A of the descender 94 and the rescue requester 88 into the airframe 80 by operating the hoisting machine 84.

Subsequently, in step Sc4, the simulation progressor 146 determines whether the selected position is within the movable range of the avatar 94A or not. Specifically, the simulation progressor 146 determines whether a distance between the position selected with the controller 3B (position of the pointer 70) and the rescue band 83 is within a predetermined value or not. If the distance between the selected position (position of the pointer 70) and the rescue band 83 is within the predetermined value, it is determined that the descender 94 can move into the airframe 80 safely and the selected position is within the movable range.

If it is determined that the selected position is within the movable range, the descender 94 determines a selected position (step Sc5). The descender 94 determines the position selected with the pointer 70 in the simulation image by operating the controller 3B. The determination action with the controller 3B is similar to the determination action in step Sa3 in the descent training process. In this case, if the simulation progressor 146 determines that the selected position is within the movable range, the simulation progressor 146 changes the color of the pointer 70. In step Sc4, if the selected position is determined to be out of the movable range, the process returns to step Sc3.

Subsequently, in step Sc6, the simulation progressor 146 updates (switches) the simulation image from a state before a predetermined action to a state after the predetermined action. The predetermined action as used in step Sc6 refers to an action in which the avatar 94A gets on the airframe 80. That is, the simulation progressor 146 updates the state of the avatar 94A from a state before the avatar 94A gets on the airframe 80 (see FIG. 18) to a state after the avatar 94A gets on the airframe 80. For example, the state is updated such that the avatar 94A is displayed at a predetermined position in the airframe 80. In this manner, in the series of actions in simulation training, the action in which the avatar 94A gets on the airframe 80 as the predetermined action is omitted and the state of the avatar 94A is updated. That is, in the pull-up training, the action in which the avatar 94A gets on the airframe 80 is set as the second type action that can be omitted.

Although not shown, in the pull-up training, the action in which the rescue requester 88 gets on the airframe 80 may be performed with the training terminal 1 of the hoist operator 93 The simulation progressor 146 mentioned in this paragraph is for the training terminal 1 of the hoist operator 93. Specifically, when the rescue requester 88 is lifted to the vicinity of the airframe 80 in the simulation image, the hoist operator 93 operates the controller 3B to select the rescue band 83 of the rescue requester 88 with the pointer 70 in the simulation image, for example, (step 1). This selection action with the controller 3B is similar to the selection action in step Sc3 described above. Then, the simulation progressor 146 determines whether the selected position is within the movable range of the rescue requester 88 or not (step 2). If it is determined that the selected position is within the movable range, the hoist operator 93 determines a selected position (step 3). That is, the hoist operator 93 determines the position selected with the pointer 70 in the simulation image by operating the controller 3B. This determination action with the controller 3B is similar to the determination action in step Sc5 described above. In this case, if the simulation progressor 146 determines that the selected position is within the movable range, the simulation progressor 146 changes the color of the pointer 70. In step 2, if the selected position is determined to be out of the movable range, the process returns to step 1. Subsequently, the simulation progressor 146 updates the simulation image from a state before a predetermined action to a state after the predetermined action (step 4). The predetermined action as used in step 4 refers to an action in which the rescue requester 88 gets on the airframe 80. That is, the simulation progressor 146 updates the state of the rescue requester 88 from a state before the rescue requester 88 gets on the airframe 80 to a state after the rescue requester 88 gets on the airframe 80. For example, the state is updated such that the rescue requester 88 is displayed at a predetermined position in the airframe 80. In this manner, in the series of actions in simulation training, the action in which the rescue requester 88 gets on the airframe 80 as the predetermined action is omitted and the state of the rescue requester 88 is updated. That is, in the pull-up training, the action in which the rescue requester 88 gets on the airframe 80 is set as the second type action that can be omitted.

In the manner described above, the pull-up training process with the training terminal 1 of the descender 94 is finished, and the process proceeds to flight training (step S6).

This flight training is training of flying the helicopter to the original departure point. In a manner similar to the flight training in step S1, the pilot 91 flies the helicopter in the simulation image by operating the piloting device 3A. The copilot 92 performs a safety check during flight or performs piloting assistance with the piloting device 3A. The hoist operator 93 and the descender 94 also perform safety checks during flight when necessary. When the helicopter arrives at the original departure point, flight training is finished, and a series of simulation training (cooperative training) is finished.

As described above, the aircraft VR training system 100 includes: the training terminal 1 that generates a simulation image for simulation training in VR space and including the avatar of the trainee 9 linked to action of the trainee 9 in real space; and the controller 3B with which the trainee 9 performs an omission operation. When the omission operation is performed with the controller 3B in a series of actions in the simulation training, the training terminal 1 of the descender 94 omits a predetermined action of the avatar 94A of the descender 94 and updates the simulation image from a state before the predetermined action to a state after the predetermined action.

An aircraft VR training method is for performing simulation training using a simulation image in VR space generated by the training terminal 1, and the simulation image includes the avatar of the trainee 9 linked to action of the trainee 9 in real space. The aircraft VR training method includes: performing an omission operation by the trainee 9; and omitting a predetermined action of the avatar by the training terminal 1 and updating the simulation image from a state before the predetermined action to a state after the predetermined action when the omission operation is performed in the series of actions in the simulation training.

The simulation program 131 is an aircraft VR training program for causing the simulation progressor 146 (computer) to implement the function of generating a simulation image for performing simulation training in VR space, and the simulation image includes the avatar of the trainee 9 linked to action of the trainee 9 in real space. The program causes the computer to implement the functions of: receiving an operation signal of the omission operation by the trainee 9; and omitting a predetermined action of the avatar and updating the simulation image from a state before the predetermined action to a state after the predetermined action when receiving the operation signal of the omission operation in a series of actions in the simulation training.

With these configurations, in the series of actions in simulation training, a predetermined action of the avatar of the trainee 9 can be omitted and the simulation image can be updated. Thus, simulation training can be performed without such an unnecessary action by setting an action that hardly obtains training effects in training using VR space as the predetermined action. Consequently, highly efficient training can be performed.

In particular, since an unnecessary action is conspicuous in cooperative training by the trainees 9, especially highly efficient simulation training can be achieved.

The series of actions in simulation training is divided into a first type action that cannot be omitted and a second type action that can be omitted, and the predetermined action is the second type action.

With this configuration, an important action that can obtain high training effects is set as the first type action, and an unnecessary action is set as the second type action. Thus, in the series of actions in simulation training, an important action is clearly distinguished from an unimportant action, and thus, the trainees 9 perform cooperative training with a sense of common tension.

Objects in VR space include the hoist cable 82 hoisted by the hoisting machine 84 from the aircraft airframe 80, the rescue band 83 coupled to the hoist cable 82, the ground surface, and the rescue requester 88 on the ground surface. The predetermined action (second type action) that can be omitted includes an action in which the avatar coupes the avatar itself to the hoist cable 82 in lifting the avatar from the airframe 80 with the hoisting machine 84, an action in which the avatar lands on the ground surface and detaches the hoist cable 82 in lowering the avatar from the airframe 80 with the hoisting machine 84, an action in which the avatar on the ground surface moves the rescue requester 88 to the vicinity of the rescue band 83 in rescuing the rescue requester 88, and an action in which the avatar ties the rescue band 83 to the rescue requester 88. These actions are unnecessary actions especially in cooperative training, and thus, are omitted to achieve highly efficient training.

While the avatar is coupled to the hoist cable 82, the training terminal 1 replaces position information of the coupling portion between the avatar and the hoist cable 82 as position information of the avatar. With this configuration, position information of the avatar itself does not need to be acquired, and thus, the amount of processing in the training terminal 1 can be reduced.

### Other Embodiments

In the foregoing section, the embodiment has been described as an example of the technique disclosed in the present application. The technique disclosed here, however, is not limited to this embodiment, and is applicable to other embodiments obtained by changes, replacements, additions, and/or omissions as necessary. Components described in the embodiment described above may be combined as a new exemplary embodiment. Components provided in the accompanying drawings and the detailed description can include components unnecessary for solving problems as well as components necessary for solving problems in order to exemplify the technique. Therefore, it should not be concluded that such unnecessary components are necessary only because these unnecessary components are included in the accompanying drawings or the detailed description.

For example, the VR training to which the VR training system 100 is applied is not limited to VR training using the helicopter. The VR training system 100 is also applicable to VR training using an aircraft other than the helicopter.

In a case where calculation capacity of the training terminal 1 of the pilot 91 and the training terminal 1 of the copilot 92 have margins, for example, the airframe calculating terminal 5 may be omitted, and each of the training terminal 1 of the pilot 91 and the training terminal 1 of the copilot 92 may calculate the amount of movement and the amount of change of posture of the airframe in the VR space. In this case, each of the training terminal 1 of the pilot 91 and the training terminal 1 of the copilot 92 is connected to its associated piloting device 3A. In this case, one training terminal 1 of the training terminals (specifically, one of the training terminals 1 of the pilot 91 and the copilot 92 whose piloting function is effective) functions as the airframe terminal for calculating a position and a posture of the airframe 80 of the aircraft in the VR space based on an operation input through the piloting device 3A.

Alternatively, the airframe calculating terminal 5 does not only calculate the amount of movement and the amount of change of posture of the airframe 80 based on an operation input through the piloting devices 3A, but also may calculate a position and a posture of the airframe 80 in the VR space based on movement amount information. In this case, the airframe calculating terminal 5 is a terminal other than the training terminals 1 and serves as an airframe terminal that calculates a position and a posture of the airframe 80 of the aircraft in the VR space based on the operation input through the piloting devices 3A.

Alternatively, each of the training terminals 1 may acquire movement amount information from the airframe calculating terminal 5, and calculate a position and a posture of the airframe 80 in VR space based on the movement amount information.

The setting terminal 6 may not have the function of monitoring training.

The trainees 9 are not limited to the pilot 91, the copilot 92, the hoist operator 93, and the descender 94. The trainees 9 may be two or three of these trainees. Alternatively, the trainees 9 may be persons other than the four described above. That is, any person who can perform cooperative training by using the VR training system 100 can be a trainee 9. For example, the trainees 9 may include a land staff (person who guides a helicopter on the ground surface), an air traffic controller, or a rescue requester 88.

In the flowcharts of FIGS. 6, 8, 14, and 17, steps may be omitted, the order of steps may be changed, or steps may be processed in parallel, or another step may be added, to the extent practicable.

The action in step Sb1 in FIG. 14, that is, the action in which the avatar 94A of the descender 94 moves to the position of the rescue requester 88, may be set as the second type action. In this case, the descender 94 performs an omission operation with the operation switch 35 to thereby select a vicinity position of the rescue requester 88. In this manner, the action in which the avatar 94A of the descender 94 moves to the position of the rescue requester 88 is omitted.

The action in step Sb7 in FIG. 14, that is, the action in which the avatar 94A of the descender 94 moves to the position of the rescue band 83, may be set as the second type action. That is, in this case, the action in which the avatar 94A of the descender 94 moves to the position of the rescue band 83 is omitted.

In step Sb5 in FIG. 14, when a selected position is determined, the state may be updated to a state where the rescue band 83 is tied to the rescue requester 88 simultaneously with updating to a state where the avatar 94A of the descender 94 is coupled to the hoist cable 82. That is, in this case, the action in which the avatar 94A of the descender 94 moves to the position of the rescue band 83 and the action in which the avatar 94A coupes the avatar 94A itself to the hoist cable 82 (carabiner 86) are omitted at the same time. Thus, in this case, steps Sb7 through Sb 11 in FIG. 14 are unnecessary.

In the embodiment described above, a series of actions including the selection action of half pressing the operation switch 35 and the determination action of fully pressing the operation switch 35 is defined as the omission operation. However, the technique disclosed in the present application is not limited to this embodiment, and only the determination action of fully pressing the operation switch 35 may be defined as the omission operation.

An image displayed by the VR display device 2 is not limited to a simulation image in a first-person viewpoint. For example, the VR display device 2 may display a simulation image in a third-person viewpoint.

The tracking system 4 can employ any technique as long as the tracking system 4 can track movement of the trainees 9. For example, the tracking system 4 may be an insideout system.

The functions of the configuration disclosed in this embodiment may be executed by using an electric circuit or a processing circuit. The electric circuit or the processing circuit may be a main processor, a dedicated processor, an integrated circuit, an ASIC, a conventional electric circuit, a controller, or any combination thereof, configured or programmed to execute the disclosed functions. The processor or the controller is, for example, a processing circuit including a transistor and other circuits. In this disclosure, a circuit, a unit, a controller, or a means are hardware or are programmed in order to execute the functions described here. The hardware here is a hardware disclosed in this embodiment or a known hardware, configured or programmed to execute the functions disclosed in this embodiment. In a case where the hardware is a processor or a controller, a circuit, a means, or a unit is a combination of hardware and software, and software is used for constituting the hardware and/or the processor.

### DESCRIPTION OF REFERENCE CHARACTERS

- 100: VR training system
- 1: training terminal (terminal)
- 131: simulation program (VR training program)
- 3B: controller (operation device)
- 91: pilot (trainee)
- 92: copilot (trainee)
- 93: hoist operator (trainee)
- 94: descender (trainee)

## Claims

1. An aircraft VR training system comprising:
a terminal that generates a simulation image for simulation training in VR space, the simulation image including an avatar of a trainee linked to action of the trainee in real space; and
an operation device with which the trainee performs an omission operation, wherein
when the omission action is performed with the operation device in a series of actions in the simulation training, the terminal omits a predetermined action of the avatar and updates the simulation image from a state before the predetermined action to a state after the predetermined action.

2. The aircraft VR training system according to claim 1, wherein
the series of actions in the simulation training is divided into a first type action that cannot be omitted and a second type action that can be omitted, and
the predetermined action is the second type action.

3. The aircraft VR training system according to claim 1 or 2, wherein
an object in the VR space includes a hoist cable that is hoisted from an airframe of an aircraft with a hoisting machine, and
the predetermined action includes an action in which the avatar couples the avatar to the hoist cable in lifting or lowering the avatar from the airframe with the hoisting machine.

4. The aircraft VR training system according to claim 1 or 2, wherein
an object in the VR space includes a hoist cable that is hoisted from an airframe of an aircraft with a hoisting machine, and a ground surface, and
the predetermined action includes an action in which the avatar lands on the ground surface or the airframe and detaches the hoist cable in lifting or lowering the avatar from the airframe with the hoisting machine.

5. The aircraft VR training system according to claim 1 or 2, wherein
an object in the VR space includes a hoist cable that is hoisted from an airframe of an aircraft with a hoisting machine, a rescue band coupled to the hoist cable, a ground surface, and a rescue requester on the ground surface, and
the predetermined action includes at least one of an action in which the avatar on the ground surface moves to a position of the rescue requester, an action in which the avatar moves the rescue requester to a position of the rescue band, an action in which the avatar ties the rescue band to the rescue requester, or an action in which the avatar moves to the position of the rescue band, in rescuing the rescue requester.

6. The aircraft VR training system according to any one of claims 3 to 5, wherein
while the avatar is coupled to the hoist cable, the terminal replaces position information of a coupling portion between the avatar and the hoist cable as position information of the avatar.

7. An aircraft VR training method for performing simulation training using a simulation image in VR space, the simulation image being generated by a terminal and including an avatar of a trainee linked to action of the trainee in real space, the aircraft VR training method comprising:
performing an omission action by the trainee; and
omitting a predetermined action of the avatar by the terminal and updating the simulation image from a state before the predetermined action to a state after the predetermined action by the terminal when the omission action is performed in a series of actions in the simulation training.

8. An aircraft VR training program for causing a computer to implement the function of generating a simulation image for performing simulation training in VR space, the simulation image including an avatar of a trainee linked to action of the trainee in real space, the aircraft VR training program causing the computer to implement the functions of:
receiving an operation signal of the omission action by the trainee; and
omitting a predetermined action of the avatar and updating the simulation image from a state before the predetermined action to a state after the predetermined action when receiving the operation signal of the omission action in a series of actions in the simulation training.
